Europäisches Patentamt

European Patent Office

Office européen des brevets

(11) Numéro de publication: **0 555 818 B1**

## (12) FASCICULE DE BREVET EUROPEEN

(45) Date de publication du fascicule du brevet: **13.12.95** (51) Int. Cl.⁶: **B23H 7/30**, B23H 7/20

(21) Numéro de dépôt: **93102039.0**

(22) Date de dépôt: **10.02.93**

(54) **Dispositif et procédé pour usiner par électro-érosion une cavité à trois dimensions avec une électrode-outil mince et rotative**

(30) Priorité: **12.02.92 CH 416/92**

(43) Date de publication de la demande:
**18.08.93 Bulletin 93/33**

(45) Mention de la délivrance du brevet:
**13.12.95 Bulletin 95/50**

(84) Etats contractants désignés:
**CH DE FR GB LI NL**

(56) Documents cités:

PATENT ABSTRACTS OF JAPAN vol. 8, no.
180 (M-318)(1617) 18 Août 1984 & JP-A-59 73
225 (MITSUBISHI DENKI KK) 25 Avril 1984

J.JAPAN SOC. ELECTRICAL MACHINING
ENG. vol. 17, no. 34, 1983, pages 30 - 42 M.
TSUCHIYA ET AL. 'three-dimensionally
controlled EDM using column shaped electrode'

PRECISION ENGINEERING vol. 10, no. 3, Juillet 1988, pages 157 - 163 T. KANEKO ET AL.
"Three-dimensional numerically controlled
contouring by electric discharge machining
with compensation for the deformation of

cylindrical tool electrodes".

(73) Titulaire: **CHARMILLES TECHNOLOGIES S.A.
8-10, rue du Pré-de-la-Fontaine
Zone industrielle de Satigny
CH-1217 Meyrin 1 (CH)**

(72) Inventeur: **Diot, Jean-Claude
Les Grangettes,
route de Bourg-Neuf
F-74140 Douvaine (FR)**
Inventeur: **Zaugg, Willi
16, La Table Ronde
F-01170 Echenevex (FR)**

Rank Xerox (UK) Business Services
(3.10/3.09/3.3.3)

## Description

La présente invention concerne de manière générale l'usinage par électro-érosion et plus particulièrement un dispositif pour usiner par électro-érosion une cavité à trois dimensions dans une pièce en utilisant une électrode-outil mince, de forme simple et indépendante de la forme de la cavité souhaitée.
Elle concerne également les machines d'électro-érosion équipées d'un tel dispositif.

On sait que l'usinage par électro-érosion d'une empreinte ou cavité à trois dimensions dans une pièce consiste généralement à effectuer une première opération par laquelle on enfonce progressivement l'électrode dans un bloc de métal. L'opération de finition, à puissance électrique progressivement décroissante, peut s'effectuer en général en utilisant successivement plusieurs électrodes de plus en plus grosses, s'approchant de plus en plus de la paroi de l'empreinte , ou, de préférence en animant l'électrode d'origine d'un mouvement latéral de translation . Toutefois, l'inconvénient du procédé de la translation circulaire est qu'il arrondit les angles de l'empreinte. Si l'on veut obtenir des angles vifs, il convient donc de revenir au procédé des électrodes successives; mais il est long et coûteux et il est difficile de maintenir l'intervalle d'usinage libre de débris de copeaux d'usinage et autres déchets qui rendent l'usinage instable.

Pour pallier ces inconvénients et diminuer le coût et le temps de conception et de fabrication des électrodes-outils, des dispositifs et procédés ont été développés pour usiner avec une électrode-outil rotative, mince, de forme simple et indépendante de la forme de la cavité souhaitée. Par exemple selon le système décrit dans EP 281 512, une électrode rotative, en forme de volume de révolution, améliore la circulation du liquide diélectrique dans la zone d'usinage et permet d'usiner avec une densité de courant supérieure à 10 A/cm2, tandis qu'on module en fonction du degré de pollution de ce liquide la vitesse de rotation de l'électrode, réalisant ainsi un "fraisage EDM".

Certains des problèmes posés par l'usure très rapide de cette électrode rotative peuvent être résolus en contrôlant périodiquement sa longueur et la déformation de son extrémité active. Ainsi, il a été proposé de compenser la perte de longueur en commandant une avance axiale additionnelle et de rectifier cette extrémité ou de remplacer l'électrode comme décrit dans WO 91/00791, par exemple.

Le but de la présente invention est un dispositif permettant de travailler sans usure latérale apparente, et dans des conditions telles que l'usure longitudinale de l'électrode-outil rotative puisse être simulée à priori, c.-à-d. déduite par le calcul de données technologiques préexistantes et de la géométrie de l'électrode-outil et de l'empreinte à éroder dans l'électrode-pièce. On peut ainsi introduire avant le début de l'usinage, dans l'unité commandant les mouvements tridimentionnels relatifs entre la pièce et l'électrode-outil, un signal compensant en continu cette usure au lieu de devoir la mesurer périodiquement en cours d'usinage et de modifier la programmation au fur et à mesure, en fonction du résultat de ces mesures, ou de devoir établir expérimentalement, pour chaque type d'outil normalisé, la courbe caractéristique décrivant la variation de cette usure en fonction de l'avancement de l'usinage.

A cet effet, le volume de la cavité à trois dimensions à évider est décomposé en une superposition de feuillets (ou couches) parallèles (dont l'épaisseur peut varier de quelques mm pour l'ébauche à quelques $\mu$m pour la finition). L'extrémité active de l'électrode-outil va décrire des mouvements de va-et-vient, en lacets par exemple, dans le plan de chacun de ces feuillets, de manière à les éroder successivement jusqu'au fond de la cavité à éroder.

L'électrode-outil est par exemple un cylindre, ou un tube cylindrique, entraîné en rotation autour de son axe à une vitesse périphérique pouvant atteindre quelques centaines de mm/s. Son diamètre peut varier de 50 à 0,1mm environ. Dans le cas d'un tube creux on peut l'irriguer par une injection centrale de liquide d'usinage. Il peut aussi s'agir d'un tube creux rempli par une deuxième matière.

Des travaux menés selon cette méthode au département d'Electrical Engineering de l'université de Yamagata, ont permis de suivre la déformation et l'usure latérale de l'extrémité active de l'électrode-outil ainsi que sa perte de longueur. Ils ont montré que la forme de cette extrémité et la vitesse avec laquelle diminue la longueur de l'électrode-outil se stabilisent après un certain temps d'usinage, cette longueur diminuant alors linéairement. Cette période de transition est d'autant plus courte que le rayon de l'électrode-outil est plus faible. Ainsi, en utilisant des électrodes normalisées pour lesquelles on a établi expérimentalement la courbe décrivant la variation de l'usure longitudinale en fonction de la distance parcourue (ou caractéristique d'usure), et en introduisant sa pente (correspondant à la période stable) dans la commande numérique, il est possible en ébauche et après une période de transition, de compenser automatiquement cette perte de longueur ("Three-Dimensionally Controlled EDM Using Column-Shaped Electrode; M. Tsuchiya, T. Kaneko and S. Shohda; J. Japan Soc. Electrical-Machining Eng., 1983, 17 (34), 30-42 ").
En finition, il est nécessaire de mesurer périodiquement (par touche électrique ou dispositif optique ) les usures latérale et longitudinale de cette électrode-outil, et de modifier périodiquement la programmation de la trajectoire, c'est-à-dire des mouvements relatifs entre la pièce et l'électrode-outil en fonction du résultat de ces mesures, afin de compenser également cette usure latérale; il s'agit d'une compensation périodique ("3D NC contouring by EDM with compensation for the deformation of cylidrical tool electrodes" (PRECISION ENGINEERING, July 1988, Vol. 10, No 3 ; pages 157-163). Les conditions d'usinage (finition à faible usure) dans lesquelles ont été menés ces travaux ne permettent pas d'atteindre un régime d'usure avec une forme stable de l'extrémité active de l'électrode-outil et une diminution linéaire de la longueur de l'électrode-outil; on reste dans la période transitoire au cours de laquelle la section et la hauteur de cette extrémité active varient constamment; il faut la "reconnaître" périodiquement en la mesurant ou en la déterminant optiquement, afin de déterminer le volume usé sur l'électrode; de plus, c'est l'angle de dépouille de la cavité à éroder qui impose sa forme à l'électrode-outil.

Au contraire, le dispositif selon la présente invention permet d'éliminer pratiquement ces phases transitoires et réalise ainsi une compensation de l'usure de l'électrode-outil exclusivement en continu, en programmant avant le début de l'usinage une avance additionelle selon son axe, ceci aussi bien en ébauche qu'en finition. Cette programmation fait appel à des paramétres technologiques préexistants, à des caractéristiques de la géométrie des électrodes. En effet la demanderesse a mis en évidence que pour certains régimes d'usinage (en général des régimes à forte usure), l'extrémité active de l'électrode-outil atteint très rapidement une forme stable, la durée de la période transitoire au moment de l'entrée de l'électrode-outil dans la pièce devenant négligeable. L'usure latérale est telle que le profil de cette extrémité active reste constant; il ne faut donc plus prendre en compte et compenser cette usure latérale, et une correction périodique n'est plus nécessaire, ce qui rend ce dispositif beaucoup plus simple que les dispositifs connus; de plus, la profondeur et le profil du sillon creusé par cette extrémité active invariante sont eux aussi invariants, ce qui rend beaucoup plus aisé la programmation de la trajectoire que devra suivre cette extrémité active pour éroder la cavité sillon par sillon. Mais surtout il présente l'immense avantage de permettre un usinage à fort rendement, car contrairement à la plupart des types d'usinage EDM connus, plus le taux d'usure est important, plus l'usinage est efficace, stable, simple et facile à simuler.

En réglant la machine d'électroérosion pour usiner à taux d'usure volumique constant, il n'est plus nécessaire d'établir expérimentalement pour chaque type d' électrode, une caractéristique d'usure. Le dispositif selon la présente invention comporte un simulateur qui est programmé pour calculer une grandeur destinée à causer une avance axiale additionnelle de l'électrode-outil dont la valeur compense son usure longitudinale, et agencé pour transmettre un signal correspondant vers l'unité de commande numérique de la machine EDM.

De plus, c'est lui qui crée le profil de l'extrémité active de l'électrode-outil de façon qu'il soit maintenu invariant durant l'usinage. Ce n'est plus la dépouille ou la courbure de la cavité à éroder qui impose son inclinaison à ce profil.

La présente invention sera mieux comprise grâce au dessin annexé, dans lequel:

la figure 1 illustre le principe du dispositif selon la présente invention;

la figure 2 représente le cas d'une électrode-outil en forme de tube creux;

la figure 3 représente quelques uns des nombreux parcours en lacets (ou balayages) du sillon érodant de proche en proche un feuillet;

la figure 4 illustre l'érosion de deux sillons voisins dans le cas d'une électrode-outil en forme de tube creux;

la figure 5 représente l'amortissement de défauts de surface, dus par exemple à une mauvaise rectification de la surface de départ, qui intervient après érosion de plusieurs feuillets;

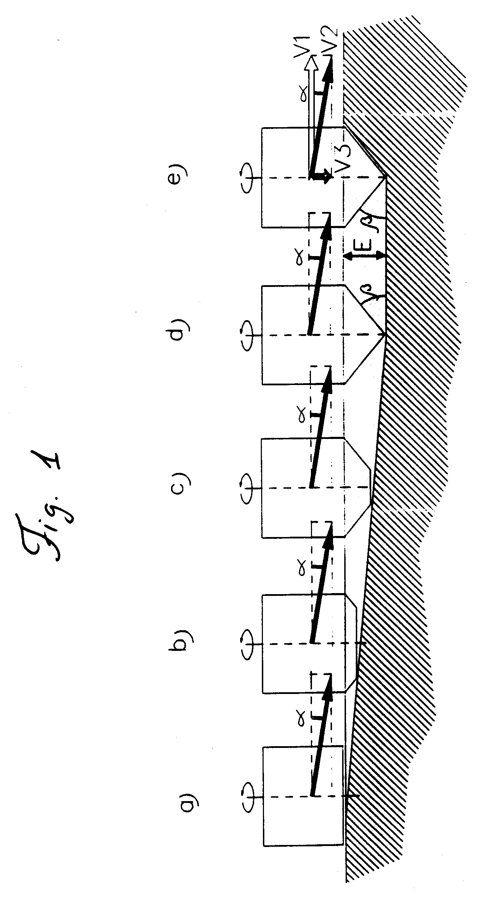

Le principe du dispositif selon la présente invention est illustré à la figure 1 qui représente 5 positions successives occupées par l'extrémité active d'une électrode-outil cylindrique depuis son arrivée au contact de la pièce à éroder (position a); la fin de la période transitoire correspond à la position d.

On voit qu'après une courte période transitoire lors de l'attaque de la pièce pendant laquelle il évolue, le profil de l'extrémité active de l'électrode-outil reste constant (invariant) durant la suite de l'usinage (de la position d à e). Seule la longueur de l'électrode-outil diminue du fait de l'usure. Dans le cas illustré ici, il s'agit d'une électrode-outil cylindrique et en fin de phase transitoire son extrémité a pris la forme d'un cône. L'angle $\beta$ du biseau obtenu dépend en particulier de l'épaisseur E du feuillet (ou profondeur de passe ou de sillon), et du rayon R de l'électrode-outil cylindrique.

On a indiqué au simulateur la valeur E de l'épaisseur du premier feuillet de matière que l'on désire éroder, celle du rayon R de l'électrode-outil ainsi que le taux d'usure volumique U (donné par des tables technologiques préétablies). Comme expliqué ci-après, ceci va lui permettre

- de déterminer, grâce à un calcul très simple, l'angle $\alpha$ (appelé par la suite "angle de compensation") que devra faire la direction (oblique) de l'avance de l'outil dans la pièce avec le plan du feuillet à évider, afin que l'extrémité active de l'électrode-outil reste parallèle au plan du feuillet à éroder (donc à la surface de la pièce), et

- d'envoyer à l'unité de la commande numérique de la machine d'électroérosion programmant les mouvements de l'électrode-outil, ou plutôt de la tête d'usinage et du porte-outil maintenant cette électrode-outil, selon les axes X, Y et Z de la machine, les signaux appropriés pour que cette avance oblique soit réalisée.

En supposant que la prise latérale est égale au diamètre de l'électrode-outil (le gap étant négligé), le volume de matière enlevé par unité de temps sur la pièce est de

$$R.E.V1$$

V1 décrivant le chemin horizontal de l'outil dans la pièce; le volume de matière enlevé par usure sur l'outil est de

$$R.E.V1.U/100;$$

le vecteur V3 qui décrit l'avance axiale additionnelle de l'outil, destinée à compenser son usure par unité de temps, a pour valeur

$$V3 = R.E.V1.U/100.S,$$

S étant la section de l'outil;
Les vecteurs V1 et V3 étant les composantes de l'avance V2 de l'outil, le simulateur peut calculer l'angle a que doit faire le vecteur V2 avec le plan du feuillet à évider:

$$tg\,\alpha = V3/V1 = R.E.U/100.S\,.$$

Il est remarquable que la valeur de l'angle a soit indépendante du vecteur V1. Si la vitesse d'avance de l'outil lelong de sa trajectoire horizontale varie, l'avance additionelle selon V3 s'ajuste à cette variation, la valeur de l'angle $\alpha$ restant constante; il n'est pas nécessaire de modifier la programmation de la trajectoire effective.

La vitesse d'avance apparente de l'outil dans la pièce (vecteur V1) est parallèle au plan du feuillet à éroder (donc la surface de la pièce). Dans cet exemple cette vitesse d'avance et ce plan sont tout deux horizontaux et perpendiculaires à l'axe de l'électrode-outil, mais d'autres variantes sont possibles, où ils sont obliques, l'axe de l'électrode-outil restant vertical.

Dans cet example, l'électrode-outil étant un cylindre avec une section de rayon R, l'expression donnant l'angle $\alpha$ peut se simplifier ainsi :

$$tg\,\alpha = E.U/100\,\pi.R.$$

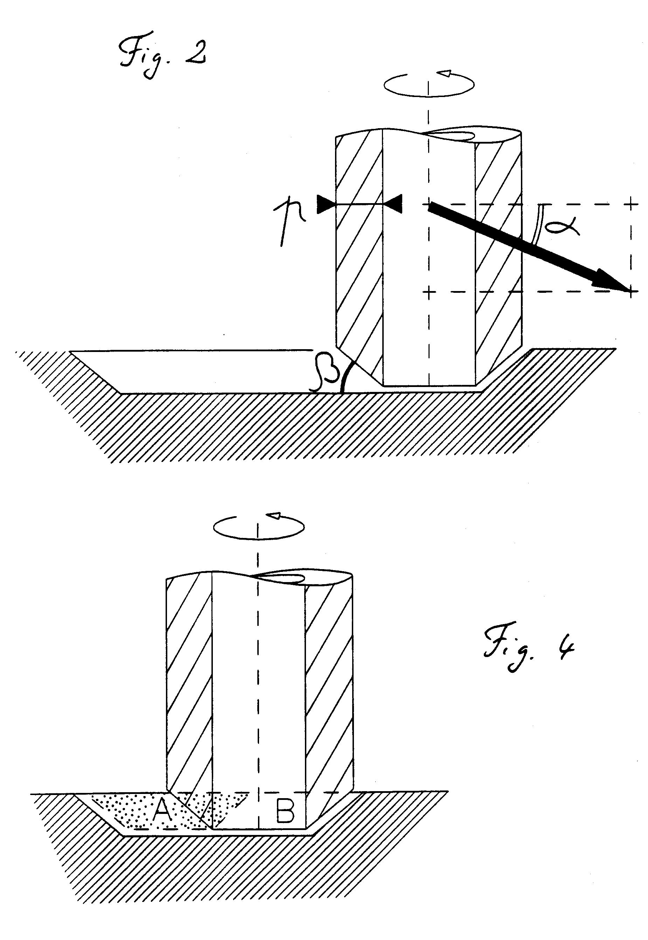

La figure 2 représente le profil de l'extrémité active d'une électrode-outil en forme de tube creux, devenu invariant en fin de phase transitoire: il s'agit d'un tronc de cône; l'angle $\beta$ du biseau obtenu dépend en particulier de l'épaisseur E du feuillet (ou profondeur de passe ou de sillon), et de l'épaisseur p des parois du tube. Ce type de profil a l'avantage de permettre le surfaçage.

D'autres variantes de l'invention font appel à des électrodes-outil d'autres formes (sections carrées, triangulaires, ...etc).

Comme indiqué ci-dessus, c'est bien le simulateur qui en déterminant l'angle $\alpha$ et en imposant à l'extrémité active de l'électrode-outil un parcours apparent perpendiculaire à l'axe de celle-ci, crée la forme du profil invariant de l'électrode-outil.

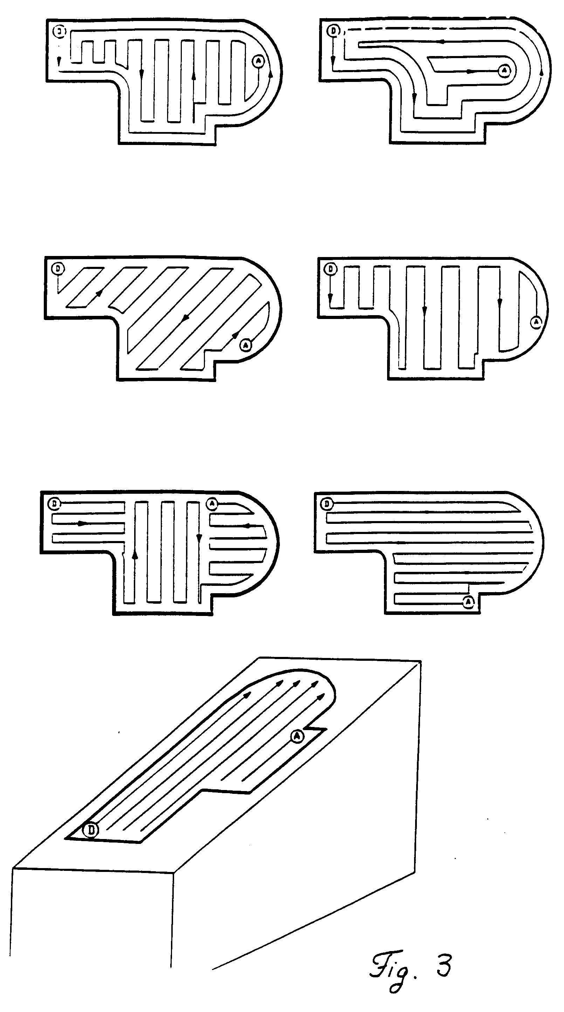

La figure 3 représente quelques uns des nombreux types de balayages que peut réaliser l'extrémité active de l'électrode-outil pour éroder un feuillet. On peut modifier ce type de feuillet en feuillet.

La prise de matière varie en général le long de la trajectoire. Ainsi, le mode de balayage choisi étant en général tel qu'il laisse des festons sur les bords du feuillet qui vient d'être évidé, on va commander à l'électrode-outil un parcours transversal à ces festons, afin d'éroder toute la hauteur de matière restant sur les bords.

Par ailleurs, lorsque l'extrémité active de l'électrode-outil balaye le feuillet parallèlement à un sillon déjà érodé, sa trajectoire a été en général programmée pour que le fond du nouveau sillon soit adjacent à celui de ce sillon déjà érodé, de manière à ce que la base du feuillet en cours d'érosion soit plane. Ainsi, si l'électrode-outil est par exemple en forme de tube creux, son extrémité active est un tronc de cône; pour éroder un fond plat, durant l'érosion du premier sillon la prise latérale de matière sera un trapèze (voir trapèze A marqué en pointillés sur la figure 4), tandis que durant l'érosion des sillons suivants, cette prise latérale sera un losange ( marqué B sur la figure 4).

Dans ces deux exemples où la prise latérale de matière varie, une des autres fonctions du simulateur selon la présente invention est de suivre (d'évaluer) cette variation en fonction de l'endroit de la trajectoire parcourue par l'électrode-outil et de calculer une nouvelle valeur, par exemple pour l'angle $\alpha$, afin d'adapter en continu la compensation de l'usure aux variations de cette prise latérale.

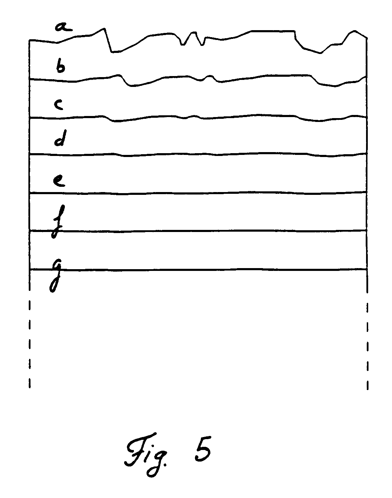

La figure 5 représente une double propriété très avantageuse du dispositif selon la présente invention:

- l'amortissement de défauts de surface, dus par exemple à une mauvaise rectification de la surface de départ, qui intervient après érosion de plusieurs feuillets;

- le fait que sans intervention du simulateur selon la présente invention, la trajectoire suivie par l'extrémité active de l'électrode-outil a tendance à rester parallèle à la surface à usiner, même si celle-ci n'est pas parfaitement plane.

La courbe a schématise une coupe dans une surface à éroder mal rectifiée, les courbes b à g les coupes de trajets suivis par l'extrémité active de l'électrode-outil lors de l'érosion de feuillets successifs.

On observe que l'extrémité active de l'électrode-outil monte naturellement vers la surface de la pièce, (sans qu'il soit nécessaire de modifier la programmation) en cas d'excès de matière à usiner: en effet, comme l'épaisseur réelle à éroder croit, l'électrode-outil s'use plus sans que le simulateur ait augmenté l'angle $\alpha$; donc la compensation devient insuffisante, ce qui a pour conséquence la montée de l'électrode; de même, en cas de déficit de manière à éroder, l'effet inverse joue , et la compensation devenant trop forte, l'extrémité active de l'électrode-outil s'enfonce: il y a autorégulation de la profondeur érodée. Mais comme ces montées ou descentes de l'extrémité active ont lieu après une (courte) période transitoire, ces retards "gomment" peu à peu, à chaque passage, ces irrégularités.

Enfin, une des autres fonctions du simulateur selon la présente invention est de comparer la diminution réelle de longueur de l'électrode-outil avec sa valeur théorique, et d'ajuster en conséquence la valeur de l'angle $\alpha$. La mesure de cette longueur réelle de l'électrode-outil peut être effectuée périodiquement, par exemple avant de décrire un nouveau feuillet, grâce à des dispositifs connus (touche électrique, dispositif optique, ...), reliés au simulateur.

En effet, le taux d'usure volumique de l'électrode-outil est sensible à de très nombreux facteurs, par exemple les variations de température et du degré de contamination du diélectrique par les déchets d'usinage. Il est donc préférable d'effectuer cette vérification, au moins deux ou trois fois en début d'usinage, de sorte à corriger éventuellement l'angle $\alpha$ avant de poursuivre, afin d'adapter la compensation de l'usure aux variations de ce taux d'usure volumique.

**Revendications**

1. Dispositif EDM pour usiner par électroérosion une cavité à trois dimensions en compensant l'usure de l'électrode-outil, comprenant
   - un organe pour entraîner en rotation une électrode-outil dont le diamètre est petit par rapport aux dimensions de la cavité à éroder,

   - une unité de commande numérique, contrôlant le mouvement tridimentionel relatif entre l'électrode-outil et la pièce à éroder,
   - des moyens pour contrôler le taux d'usure volumique, et
   - des moyens informatiques agencés pour mémoriser le volume de la cavité à éroder sous forme d'une superposition de fines couches virtuelles parallèles, simuler une trajectoire de l'électrode-outil telle que sa pointe balaie sillon par sillon, successivement chacune de ces couches, et pour transmettre un signal correspondant vers l'unité de contrôle tridimentionel,

   caractérisé par un simulateur
   - programmé pour calculer à priori l'usure longitudinale de l'électrode-outil rotative ou une grandeur destinée à causer une avance axiale additionnelle de l'électrode-outil apte à compenser en continu son usure longitudinale, ceci à partir de paramètres technologiques préexistants et de caractéristiques de la géométrie des électrodes, et
   - agencé pour transmettre un signal correspondant, compensant en continu cette usure, vers l'unité de contrôle tridimentionel.

2. Dispositif selon la revendication 1, dans lequel la grandeur calculée par le simulateur est la tangente de l'angle $\alpha$ que devra faire la direction oblique de l'avance de l'outil dans la pièce avec le plan de la couche à évider, afin que l'extrémité active de l'électrode-outil reste parallèle au plan de cette couche, donc à la surface de la pièce.

3. Dispositif selon la revendication 1, dans lequel la grandeur calculée par le simulateur est indépendante de la valeur de la vitesse d'avance de l'outil dans la pièce.

4. Dispositif selon la revendication 1, dans lequel le simulateur est programmé pour calculer l'usure longitudinale de l'électrode-outil ou la grandeur destinée à commander son avance axiale additionnelle compensant cette usure, de manière que la vitesse d'avance apparente de l'outil dans la pièce et le plan du feuillet à éroder soient tout deux horizontaux et perpendiculaires à l'axe de l'électrode-outil.

5. Dispositif selon la revendication 1, dans lequel l'un des paramètres technologiques préexistants ou caractéristiques de la géométrie des électrodes à partir desquels est programmé le simulateur, est le taux d'usure volumique et/ou l'épaisseur de la couche de matière que l'on désire éroder et/ou le rayon de l'électrode-outil et/ou l'épaisseur de sa paroi.

6. Dispositif selon la revendication 1, dans lequel le simulateur est également programmé pour évaluer la variation de la prise latérale de matière en fonction de l'endroit de la trajectoire parcourue par l'électrode-outil et calculer la nouvelle valeur, correspondant à cette variation, de l'usure longitudinale de l'électrode-outil ou de la grandeur destinée à commander son avance axiale additionnelle, de manière à adapter en continu la compensation de l'usure aux variations de cette prise latérale.

7. Dispositif selon la revendication 1, dans lequel le simulateur coopère avec des moyens de type connu agencés pour mesurer au moins périodiquement la diminution réelle de longueur de l'électrode-outil et est également programmé pour comparer cette diminution avec sa valeur théorique et ajuster en conséquence la valeur de l'usure longitudinale de l'électrode-outil ou de la grandeur destinée à commander son avance axiale additionnelle, de manière à adapter la compensation de l'usure en particulier aux variations du taux d'usure volumique.

8. Utilisation d'un dispositif selon la revendication 1 pour un usinage réalisé avec un régime à forte usure et dans laquelle l'électrode-outil est soit un cylindre, soit un tube creux ou un cylindre enrobé latéralement d'un deuxième métal.

## Claims

1. EDM device for machining by electro-erosion a three-dimensional cavity, whilst compensating for wear to the electrode tool, comprising
   - an instrument for rotationally driving an electrode tool whose diameter is small relative to the dimensions of the cavity to be eroded,
   - a numerical control unit controlling the relative three-dimensional movement between the electrode tool and the workpiece,
   - means for controlling the rate of volume wear,
   - computer means for memorising the volume of the cavity to be eroded in the form of a superposition of fine virtual parallel layers, simulating a trajectory of the electrode tool such that its tip scans each of these layers groove by groove, and for transmitting a corresponding signal to the three-dimensional control unit, characterised by a simulator,
   - programmed to calculate a priori the longitudinal wear to the rotating electrode tool or a size intended to cause an additional axial feed of the electrode tool capable of compensating continuously for its longitudinal wear, on the basis of already existing technological parameters and geometrical characteristics of the electrodes, and
   - designed to transmit a corresponding signal, continuously compensating for this wear, to the three-dimensional control unit.

2. Device according to claim 1, in which the size calculated by the simulator is the tangent of the angle $\alpha$ which the oblique direction of the feed of the tool into the piece is to make with the plane of the layer to be removed, in order that the active tip of the electrode tool remains parallel to the plane of this layer, and thus parallel to the surface of the piece.

3. Device according to claim 1, in which the size calculated by the simulator is independent of the value of the feed speed of the tool into the piece.

4. Device according to claim 1, in which the simulator is programmed to calculate the longitudinal wear to the electrode tool or the size intended to control its additional axial feed compensating for this wear, in such a way that the apparent feed speed of the tool into the piece and the plane of the sheet to be eroded are both horizontal and perpendicular to the axis of the electrode tool.

5. Device according to claim 1, in which one of the already existing technological parameters or geometrical characteristics of the electrodes, from which the simulator is programmed, is the rate of volume wear and/or the thickness of the layer of matter which is to be eroded and/or the ray of the electrode tool and/or the thickness of its wall.

6. Device according to claim 1, in which the simulator is also programmed to evaluate the variation of the lateral material grip as a function of the location of the trajectory covered by the electrode tool and to calculate the new value, corresponding to this variation, of the longitudinal wear to the electrode-tool or the size intended to control its additional axial feed, in such a way as to adapt continuously the compensation for the wear to the variations of this lateral grip.

7. Device according to claim 1, in which the simulator co-operates with known means intended for measuring, at least periodically, the real diminution of the length of the electrode tool and is also programmed to compare this diminution with its theoretical value and consequently to adjust the value of longitudinal wear to the electrode tool or the size intended to control its additional axial feed, in such a manner as to adapt the compensation for the wear in particular to the variations of the rate of volume wear.

8. Use of a device according to claim 1 for a machining realised under high-wear conditions and in which the electrode tool is either a cylinder, a hollow tube or a cylinder laterally coated with a second metal.

**Patentansprüche**

1. EDM-Vorrichtung zum Herstellen einer dreidimensionalen Ausnehmung durch Elektroerosion unter Kompensation der Elektrodenabnutzung, umfassend
   - ein Organ zum Drehantrieb einer Werkzeugelektrode, deren Durchmesser in bezug auf die zu erodierenden Ausnehmung klein ist,
   - eine numerische Steuereinheit, die die dreidimensionale Relativbewegung zwischen der Werkzeugelektrode und dem zu erodierenden Werkstück steuert,
   - Mittel zum Steuern die Volumenverschleißrate und
   - Informationsmittel, betrieben zum Speichern des zu erodierenden Ausnehmungsvolumens in Form einer Überlagerung von parallelen virtuellen feinen Schichten, zum Simulieren einer Bahn der Werkzeugelektrode derart, daß ihre Abtragungstelle Furche um Furche nacheinander jede dieser Schichten folgt, und zum Übertragen eines entsprechenden Signals auf die Einheit zum dreidimensionalen Steuern,
   gekennzeichnet durch einen Simulator
   - programmiert zum à priori Berechnen des Längsverschleißes der sich drehenden Werkzeugelektrode oder einer Größe, dazu bestimmt, einen zusätzlichen axialen Vorschub der Werkzeugelektrode zu bewirken, der geeignet ist, kontinuierlich ihren Längsverschleiß zu kompensieren, und zwar ausgehend von vorher existierenden technologischen Parametern und Geometrieeigenschaften von Elektroden, und
   - betrieben zum Übertragen eines entsprechenden Signals, kontinuierlich diesen Verschleiß kompensierend, auf die Einheit zur dreidimensionalen Steuerung.

2. Vorrichtung nach Anspruch 1, bei der die durch den Simulator berechnete Größe die Tangente des Winkels ist, den die schräge Richtung des Werkzeugvorschubs in dem Werkstück mit der Ebene der auszunehmenden Schicht bilden muß, damit das aktive Ende der Werkzeugelektrode parallel zur Ebene dieser Schicht und folglich zur Oberfläche des Werkstücks verbleibt.

3. Vorrichtung nach Anspruch 1, bei der die durch den Simulator berechnete Größe unabhängig vom Wert der Vorschubgeschwindigkeit des Werkzeugs in dem Werkstück ist.

4. Vorrichtung nach Anspruch 1, bei der der Simulator zum Berechnen des Längsverschleiß der Werkzeugelektrode oder der zum Steuern ihres zusätzlichen, den Verschleiß kompensierenden Axialvorschubs bestimmten Größe derart, daß die scheinbare Vorschubgeschwindigkeit des Werkzeugs in dem Werkstück und die Ebene der zu erodierenden Schicht alle beide horizontal und senkrecht zur Achse der Werkzeugelektrode verlaufen, programmiert ist.

5. Vorrichtung nach Anspruch 1, bei der der eine der vorher existierenden technologischen Parametern oder Geometrieeigenschaften von Elektroden, ausgehend von denen der Simulator programmiert ist, die volumenmäßige Verschleißrate und/oder die Stärke der Materialschicht, die man zu erodieren wünscht, und/oder der Radius der Werkzeugelektrode und/oder die Stärke ihrer Wandung ist.

6. Vorrichtung nach Anspruch 1, bei der der Simulator zum Bewerten der Änderung der seitlichen Abnahme von Material als Funktion der Stelle der von der Werkzeugelektrode durchlaufenen Bahn und zum Berechnen des neuen Wertes entsprechend dieser Änderung des Längsverschleißes der Werkzeugelektrode oder der Größe, die zum Steuern ihres zusätzlichen Axialvorschubs bestimmt ist, um kontinuierlich die Verschleißkompensation den Änderungen dieser seitlichen Abnahme anzupassen, programmiert ist.

7. Vorrichtung nach Anspruch 1, bei der der Simulator mit Mitteln bekannten Typs zusammenarbeitet, die zum wenigstens periodischen Messen der reellen Abnahme der Länge der Werkzeugelektrode ausgebildet sind, und gleichzeitig programmiert ist, um diese Abnahme mit ihrem theoretischen Wert zu vergleichen und als Folge den Wert des Längsverschleißes der Werkzeuelektrode oder der Größe bestimmt zum Steuern ihres zusätzlichen Axialvorschubs derart zu steuern, daß die Verschleißkompensation insbesondere an die Änderungen der volumenmäßigen Verschleißrate angepaßt wird.

8. Verwendung einer Vorrichtung gemäß Anspruch 1 für eine in einem Bereich starken Verschleißes realisierte Bearbeitung, und bei der die Werkzeugelektrode zylindrisch, entweder ein hohles Rohr oder ein außen von einem zweiten Metall umgebener Zylinder, ist.

Fig. 1

Fig. 2

Fig. 4

Fig. 3

*Fig. 5*